# EUROPEAN PATENT APPLICATION

(11) **EP 1 365 227 A1**
(43) Date of publication of application: **26.11.2003**
(21) Application number: 01273567.6
(22) Date of filing: 03.12.2001
(51) Int. Cl.: G01N 5/02, H03H 9/17

(54) **OSCILLATOR AND MASS DETECTOR**

(30) Priority: 30.01.2001 JP 2001021254
(71) Applicant: Initium, Inc., Tokyo 107-0062 (JP)
(72) Inventor: JITSUKAWA, Tomofumi, Yokohama-shi, Kanagawa 244-0003 (JP); OKAHATA, Yoshio, Kawasaki-shi, Kanagawa 215-0015 (JP)
(74) Representative: Hess, Peter K., Dipl.-Phys.
(86) International application number: JP0110545
(87) International publication number: WO02061396

(57) **Abstract**

An oscillator (2) capable of oscillating signals of specified frequencies in dipped state in liquid, comprising a vibration plate of piezoelectric material (9) having an obverse side (9a), a reverse side (9b), and a side surface (9c), a first electrode (10A) installed on the obverse side (9a) of the vibration plate (9), a second electrode (10B) installed on the reverse side (9b) of the vibration plate (9), and a cover element (6) for covering at least the reverse side (9b) of the vibration plate (9), wherein an opening (14) is provided in the covering element (6), the first electrode (10A) comes into contact with the liquid with the oscillator (2) dipped in the liquid, gas is held in a space (23) formed of the reverse side (9b) and the covering element (6), and the opening (14) is allowed to communicate with the space (23), whereby, even if the liquid temperature varies, the oscillation frequencies can be stabilized in a rather short time.

## Description

### TECHNICAL FIELD OF THE INVENTION

The present invention relates to an oscillation device for supplying an signal having a predetermined oscillation frequency in the state where it is immersed in a liquid, and also relates to a mass detection apparatus for determining a quantity of a substance in the liquid, using such an oscillation device.

### BACKGROUND OF THE ART

A quartz oscillator element is produced by depositing metal onto both the obverse and reverse sides of a thin quartz plate to form metal electrodes thereon, and an AC power supply is connected to the metal electrodes. When an AC electric field is applied between the paired metal electrodes, the quartz plate generates a vibration having a constant period due to the piezoelectricity of quartz.

When a substance is adhered to one of the electrodes, the signal generated from the oscillation device provides a decreased oscillation frequency. In this case, there exists a linear relationship between the weight of the adhered substance and a change in the oscillation frequency. For instance, when an AT-cut quartz oscillator element is operated at an oscillation frequency of 9 MHz, an adhesion of a substance having a weight of 1 ng onto one of the electrodes causes the oscillation frequency to be decreased by approximately 1 Hz, thereby enabling the mass of the substance having extremely small weight to be determined.

It is known that such a quartz oscillation device is immersed in a solution and is used to determine the mass of a substance in the solution. In this case it is necessary to avoid the short circuit between the paired electrodes via the solution For this purpose, it is necessary that one electrode is in contact with the solution and the other electrode is sealed in a gas atmosphere so as not to be in contact with the solution. It is known that a quartz plate may be air-tightly sealed by clamping the quartz plate with, for example, an O-ring. Japanese Unexamined Patent Application Publication No. 10-38784 discloses a method for sealing a quartz plate so as not to be exposed to the solution without any usage of such an O-ring.

### DISCLOSURE OF THE INVENTION

In these prior arts, however, there is a problem that the oscillation of such a quartz plate is mechanically suppressed, when an AC electric field is applied to the quartz plate, so that the efficiency of oscillation is deteriorated. In order to overcome the problem, the present applicant proposed in Japanese Patent Application No. 11-335723 (the date of filing: November 26, 1999) that the other electrode disposed in the reverse side of a quartz plate is air-tightly sealed by a one-side cover element and the one-side cover element is provided with a side wall such that the inside surface of the side wall of the one-side cover element is in contact with the side surface of the quartz plate. In this case, a space between the outermost circumferential area of the quartz plate and the inside surface of the one-side cover element is sealed by a silicone resin, and a gas is tightly sealed between the one-side cover element and the revere side of the quartz plate, so that the electrode on the reverse side is in contact with the gas and not in contact with the liquid.

However, the inventor studied the proposed approach and ascertained a problem still unsolved. In the case when, for instance, a quartz oscillator element is immersed in an aqueous solution, and then is energized to generate a signal having a predetermined frequency under condition that an AC electric field is applied between the paired electrodes, a change in the water temperature causes the oscillation frequency to be deviated, so that the oscillation of the quartz becomes instable. If, for example, the water temperature is change by more than 2°C, 4 to 6 hours are normally required till the oscillation frequency becomes stable. Certainly, a mass detection apparatus, using the change in the oscillation frequency of a quartz oscillator element, is excellent, for instance for a medical measuring apparatus. However, a change in the water temperature causes the oscillation frequency to be deviated so that the state of oscillation becomes instable. This fact prevents the mass detection apparatus from spreading.

Accordingly, it is an object of the present invention to provide an oscillation device capable of generating a signal having a predetermined frequency even if it is immersed in a liquid, and it is another object of the present invention to provide a novel structure capable of stabilizing the oscillation frequency in a relatively short time, even if the temperature of the liquid is altered, in a mass detection apparatus in which such a quartz oscillation device is employed.

According to the present invention, an oscillation device supplying a signal having a predetermined oscillation frequency in a state where the oscillation device is immersed in a liquid, the oscillation device includes: a vibration plate made of piezoelectric material, the vibrating plate having an obverse side, a reverse side and a side surface; a first electrode disposed in the obverse side of the vibration plate; a second electrode disposed in the reverse side of the vibration plate; and a cover element for covering at least the reverse side of the vibration plate; wherein the first electrode is in contact with the liquid in the state where the oscillation device is immersed in the liquid, and a space formed by the reverse side and the cover element is filled with gas, in which case, an opening connected to the space is disposed in the cover element.

Furthermore, the present invention is a mass detection apparatus for detecting the mass of a target substance solved or suspended in a liquid, wherein the mass detection apparatus is equipped with the oscillation device and a detection substance which is immobilized on the first electrode and combined with the target substance.

As described above, the present inventor intensively studied the origin of the instable oscillation resulting from the change in the liquid temperature, and ascertained the following fact: A vibration plate consisting of a piezoelectric element, such as quartz or the like, is in a very delicate state of oscillation, and therefore it is significantly influenced by the circumferential conditions of the vibration plate. The present inventor found that the above-mentioned instability in the oscillation was induced, in particular mainly by the following mechanism:

In an oscillation device, a space between an vibration plate and a cover element is filled with gas, and the second electrode on the reverse side of the vibration plate faces the space so that the second electrode is not directly in contact with the liquid at the outside of the oscillation device. In anyone of the prior arts, the oscillation device is improved such that the short circuit between the first and second electrodes due to the contact of the second electrode with the liquid is avoided by sealing the space.

However, the gas in the space between the vibration plate and the cover element is expanded, even when the temperature of liquid surrounding the oscillation device rises at a very small amount in the state where the oscillation device is immersed in a liquid. As a result, the air pressure applied onto the vibration plate in the oscillation rises so that a very small deformation or stain is generated therein.

In conjunction with the above, a load is applied to the sealing portion between the vibration plate and the cover element. The cover element is made of typically a gummy material and therefore it is deformable. Consequently, the sealing portion between the vibration plate and the cover element is deformed due to the pressure charge. In addition, the state of hydration in the sealing portion between the cover element and the vibration plate becomes unbalanced, so that the sealing portion is further deformed. Such a fine deformation causes the vibration plate supported by the cover element to be indirectly deformed. As a result, the oscillation state of the vibration plate is changed, thereby making it difficult to arrive at a stable state of oscillation.

At the same time, an increase in the liquid temperature causes the temperature to be risen on the obverse side of the vibration plate where it is directly in contact with the liquid. However, the temperature on the reverse side of the vibration plate where it is not directly in contact with the liquid is relatively lower. As a result, a temperature difference is generated between the obverse and reverse sides of the vibration plate to provide a change in the saturation humidity due to the increased pressure in the space between the vibration plate and the cover element, so that the dew is generated on the reverse side of the vibration plate. Hence, it is found that the dew generated on the reverse side of the vibration plate causes the state of oscillation in the vibration plate to be changed with the mass of the dew.

On the basis of the above-mentioned knowledge, the inventor found the following arrangement: The short circuit between the electrode on the reverse side (a second electrode) and a first electrode due to the contact of the former electrode with the liquid is prevented by filling a space formed by the reveres side of the vibration plate and the cover element with a gas, in which case, the cover element is provided with an opening and the space which the second electrode faces is connected to the opening.

In this arrangement, when the temperature of the liquid is changed and thereby the gas in the space between the vibration plate and the cover element is expanded, part of gas is discharged from the opening into the liquid, so that the pressure in the space is always maintained at a constant value. Accordingly, it is found that the above-mentioned problems resulting from the variation of the pressure in the space between the vibration plate and the cover element, i.e., the deformation of the vibration plate, the deformation of the cover element, the generation of dew on the reverse side of the vibration plate and others, may be overcome. As a result, the inventor succeeded in stabilizing the oscillation frequency of the oscillation device after a relatively small time interval, even if the temperature of liquid is changed.

### BRIEF DESCRIPTION OF THE DRAWINGS

Fig. 1 is a plan view of a quartz oscillation device 1 according to an embodiment of the invention.
Fig. 2 is a rear view of the quartz oscillation device 1 in Fig. 1, viewed from the reverse side thereof.
Fig. 3 is a side view of the oscillation device 1.
Fig. 4(a) is a plan view of the periphery of a quartz plate 9, viewed from the obverse side 9a and Fig. 4(b) is a cross-sectional view viewed from line IVb - IVb in Fig. 4(a).
Fig. 5 is a plan view of the periphery of the quartz plate 9 viewed from the reverse side.
Fig. 6 is a schematic diagram for explaining the operation condition of the oscillation device 1.
Fig. 7 is a diagram showing the time variation in the oscillation frequency of the oscillation device according to an inventive example when the temperature of the liquid is changed.
Fig. 8 is a diagram showing the time variation in the oscillation frequency of the oscillation device according to a comparative example when the temperature of the liquid is changed.

### BEST MODE FOR CARRYING OUT THE INVENTION

In accordance with a preferred embodiment of the invention, when an oscillation device is immersed in a liquid, an expansion of gas causes part of gas to be discharged from an opening into the liquid, so that the pressure in a space is maintained at a constant value. On the contrary, a compression of gas causes the interface between the gas phase and liquid phase to be moved in the vicinity of the opening, so that the pressure in the space is also maintained at a constant value.

In accordance with the preferred embodiment, when the oscillation device is immersed in the liquid, an opening is located at a lower position than a second electrode. As a result, even if liquid flows in from the opening, the liquid remains at a lower position in the space and is in no contact with the second electrode on the reverse side, thereby enabling the measurement error to be excluded.

Although there is no limitation on the material for a cover element, an elastic material is preferable in order to suppress the effect of the vibration on a vibration plate in a minimum state. A viscoelastic polymer material is more preferable. In a concrete manner, a water-repellant viscoelastic polymer material is more preferable and, in particular, silicon resin is most preferable.

In accordance with the preferred embodiment, the liquid is preferably either an aqueous solution or an aqueous suspension.

In accordance with the preferred embodiment, the cover element comprises a main body section facing the reverse side; a side wall section surrounding the side surface of the vibration plate; and a sealing element for sealing the space between the side wall section and the surface of the vibration plate, wherein the inside wall of the side wall section is connected to the side surface of the vibration plate. The sealing element is adhered to the inside wall which is in contact with the side surface of the vibration plate, and therefore the sealing element is inevitably positioned at the end portion of the vibration plate. As a result, the outermost edge of the vibration plate, where the amplitude of vibration is minimum, is sealed and fixed, thereby enabling the resonance oscillation to be efficiently activated.

In accordance with the invention, there is no special limitation on the shape of the opening and the number of the openings. The shape of the opening can be selected from various shapes, i.e., a circle, an ellipse, a triangle, a square, a hexagon and others.

In accordance with the invention, there is no special limitation on the size of the opening. However, an increase in the size of the opening is advantageous regarding a rapid responsibility to an abrupt change in the air pressure in the space between the cover element and the vibration plate. In view of this fact, the opening should have preferably an area of more than 0.01 mm² and more preferably an area of more than 1.00 mm².

From a similar viewpoint, in the case of a circular opening or an elliptic opening, the diameter or the major axis should be preferably more than 0.1 mm and more preferably more than 0.5 mm. In the case of a square opening, the length of each side should be preferably more than 0.1 mm and more preferably more than 0.5 mm.

However, an excessively large size of the opening causes the liquid to be introduced at a greater amount via the opening. Although there is no problem regarding the entrance of the liquid via the opening in the state of a quiet liquid, the liquid enters at a greater amount via the opening when the liquid is either stirred or vibrated. In order to suppress the entrance of the liquid via the opening, the sectional dimensions of the opening should be preferably smaller than 10.0 mm² and more preferably smaller than 8.0 mm².

From a similar viewpoint, in the case of a circular opening or an elliptic opening, the diameter or the major axis should be preferably smaller than 3.5 mm and more preferably smaller than 3.0 mm. In the case of a square opening, furthermore, the length of each side should be preferably smaller than 3.5 mm, and more preferably smaller than 3.0 mm.

As a piezoelectric material for producing the vibration plate, a piezoelectric crystal, such as quartz, lithium niobate single crystal, lithium tantalate single crystal, lithium niobate/lithium tantalate solid solution single crystal, lithium/potassium niobate single crystal or the like is preferable. However, quartz is most preferable.

In a mass detection apparatus according to the invention, there is no special limitation regarding the combination of a target substance and a detection substance. However, the most preferable combination is as follows:
(1) An organic compound and an antibody for the organic compound
   In this case, alkylphenol ethoxylate and antibody for the compound; bisphenol A and 17β-estradiol antibody; and phthalate ester and 17β-estradiol antibody are exemplified.
(2) An organic compound and DNA intercalated in the organic compound
   In this case, a combination of alkylphenol ethoxylate and DNAis exemplified.
(3) A microbial antigen and an antibody for specifically identifying the microbe
   In this case, a colon bacillus and an antibody for the colon bacillus; legionella pneumophila and an antibody for the legionella pneumophila; and staphylococcus aureus and an antibody for the staphylococcus aureus are exemplified.
(4) A cellular antigen and an antibody for specifically identifying the cell

In this case, a cell in blood and an antibody for the cell in blood; and tissue cell and antibody for the tissue cell are exemplified.

In the following, an embodiment of the invention will be described, referring to the accompanying drawings.

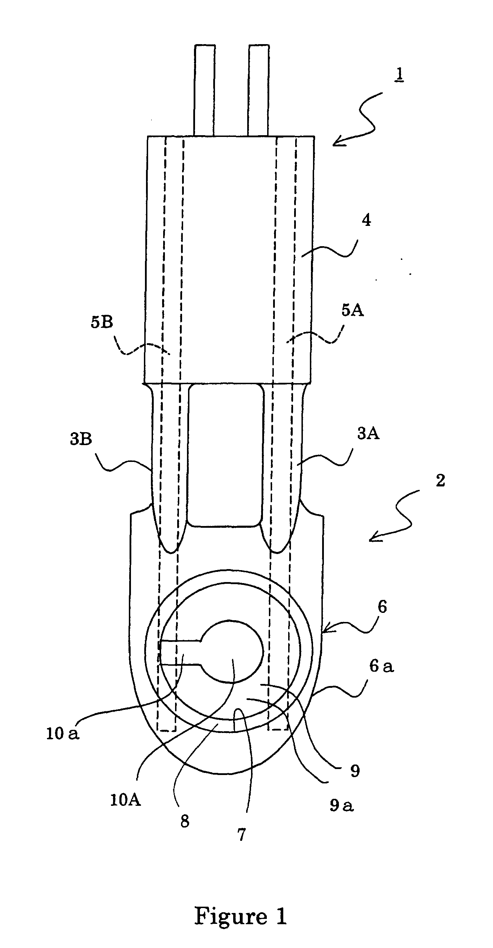

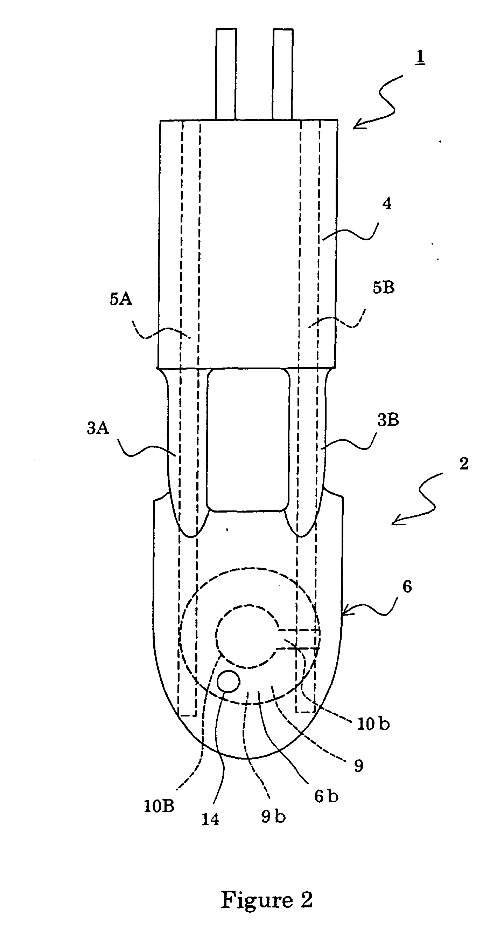

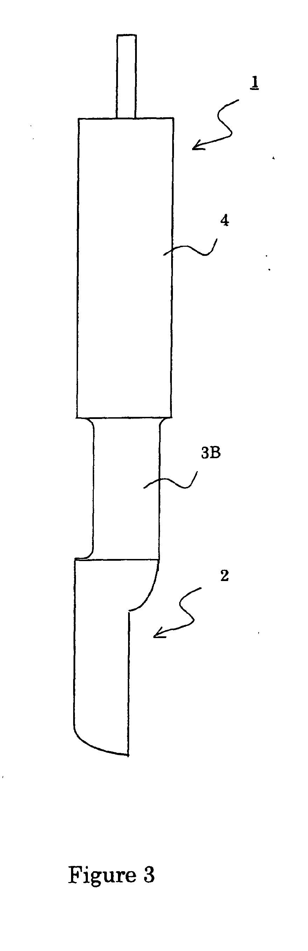

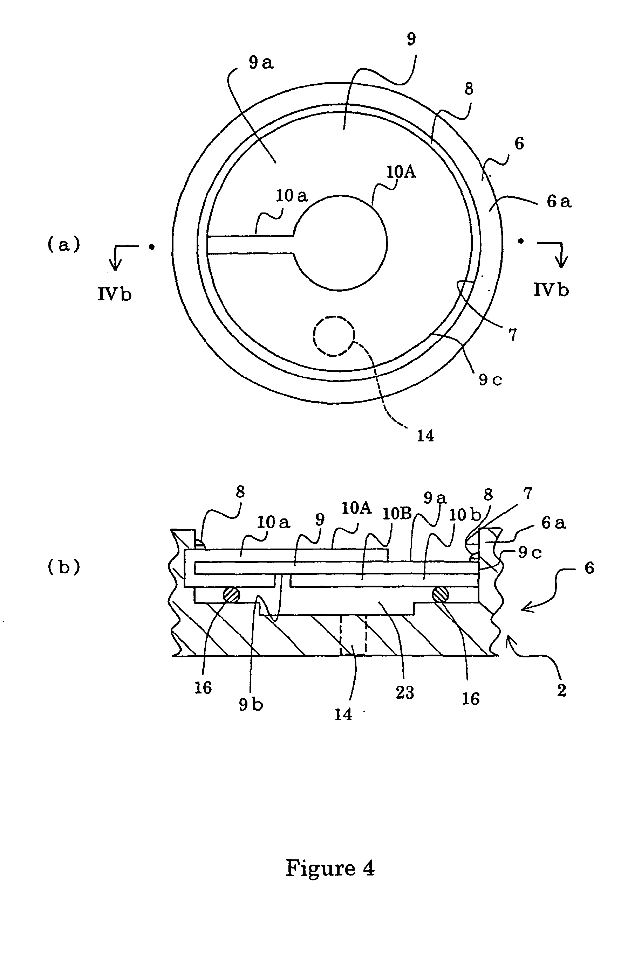

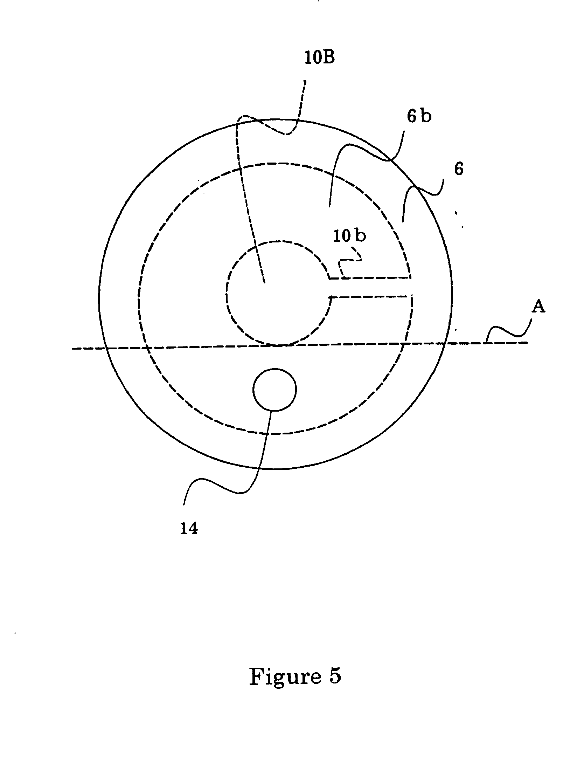

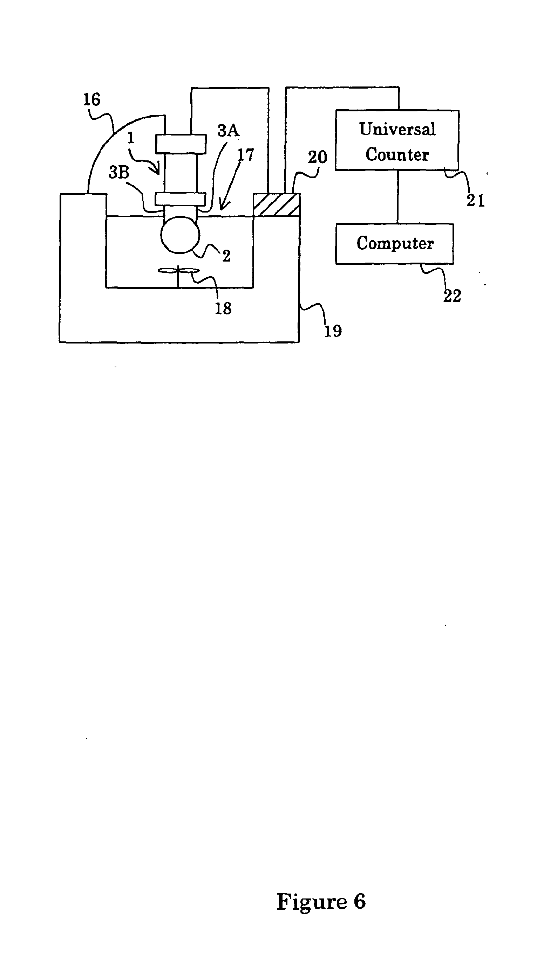

Fig. 1 is a plan view of a quartz oscillation device 1 according to the embodiment of the invention. Fig. 2 is a rear view of the quartz oscillation device 1 viewed from the reverse side thereof. Fig. 3 is a side view of the oscillation device 1. Fig. 4(a) is a plan view of the surrounding of the vibration plate 9 viewed from an obverse side 9a, and Fig. 4(b) is a cross section of the vibration plate viewed from line IVb - IVb in Fig. 4(a). Fig. 5 is a plan view of the surrounding of the vibration plate 9 viewed from the reverse side thereof. Fig. 6 is a schematic diagram for describing the operation state of the oscillation device 1.

As shown in Fig. 1, the oscillation device 1 according to the embodiment comprises a base section 4, an oscillator element 2 and a pair of lead wire covers 3A, 3B for connecting the base section 4 to the oscillator element 2. Lead wires 5A, 5B are inserted into the inside of the oscillator element 2, after passing through the base section 4 and the lead wire covers 3A, 3B.

As shown in Figs. 1 and 4, a first electrode 10A is formed at the center of the obverse side 9a of a vibration plate 9, and a lead part 10a is extending from the electrode 10A. The lead part 10a further reaches a reverse side 9b of the vibration plate 9 via the side surface thereof, as shown in Fig. 4(b). Moreover, a second electrode 10B is formed at the center of the reverse side 9b of the vibration plate 9, and a lead part 10b is extending from the electrode 10B toward the circumference of the vibration plate 9.

The vibration plate 9 is supported by a cover element 6. The cover element 6 comprises a main body section 6b in the form of an approximately flat plate and a side wall section 6a projected from the main body section 6b. The vibration plate 9 is inserted into the inside of an inside wall surface 7 in the side wall section 6a of the cover element 6 and fixed thereto, and a side surface 9c of the vibration plate 9 is in contact with the inside wall surface 7 and supported by the inside wall surface 7. A space between the inside wall surface 7 and the periphery of the vibration plate 9 is sealed by a sealing element 8. Seal elements 16, such as O rings or the like, are interposed between the main body section 6b of the cover element 6 and the reverse side 9b of the vibration plate 9. A space 23 is formed by the reverse side 9b of the vibration plate 9 and the cover element 6, and the space 23 is filled with a gas.

The lead wire 3A is connected to the first electrode 10A after passing through the lead part 10a, and the lead wire 3B is connected to the second electrode 10B after passing through the lead part 10b. Each of the lead wires is covered by the cover element 6 and it is extending into the base section 4 after passing through the lead wire cover 3A and 3B, respectively.

An opening 14 connected to the space 23 is formed in the main body section 6b of the cover element 6. As a result, an external liquid can be introduced into the space 23 via the opening 14.

Fig. 6 shows an example of applying the oscillation device 1 to the measurement of liquid. The oscillation device 1 is mounted onto an oscillator element-adapting arm 16, and the oscillator element 2 is immersed in a liquid 17. The liquid 17 is stored in a thermostat heat block 19. The liquid is stirred by a stirrer 18. An AC electric field is applied between the first and second electrodes in the oscillator element 2 by an oscillation circuit 20 so as to activate the oscillator element 2 in the resonant state. The oscillation frequency of the oscillation circuit 20 is counted by a universal counter 21 and then analyzed by a computer 22.

When the oscillation device 1 according to the invention is immersed in the liquid 17, the entrance of the liquid into the space 23 due to the gas pressure is fundamentally suppressed, because the space 23 is filled with the gas. In this state, the oscillation circuit 20 is activated, and continues the state till the oscillation frequency is stabilized.

After the oscillation frequency is stabilized, a specimen, the mass of which is to be measured, is injected into the liquid from a specimen injection apparatus. Thus, part of the specimen is combined with a detection material, which is immobilized onto the electrodes. This causes the mass to be changed, and therefore the oscillation frequency is also changed. On the basis of the change in the oscillation frequency, the mass of a substance in a specimen can be determined.

During the measurement, the space 23 is maintained at the same pressure as the atmospheric pressure even if the liquid temperature is changed, so that the above-mentioned instability in the oscillation frequency may be suppressed. As a result, the oscillation frequency is stabilized at a relatively short time.

In accordance with the invention, the opening 14 is disposed preferably below the line A, which is indicated at the most lower position of the second electrode 10B, as shown in Fig. 5. Hence, even if a small amount of liquid enters the space from the opening 14, the liquid may be prevented from directly being in contact with the electrode 10B.

### Examples

### (Experiment 1)

Employing the oscillation device, which described referring to Figs. 1 - 6, the following experiments were carried out. In this case, the cover element 6 was made of a silicone rubber, and the vibration plate 9 was made of quartz, in which case, the vibration plate 9 had a radius of 3.8 mm. The first and second electrodes were prepared by evaporating gold. The shape of the opening 14 was circular, and the number of openings was only one, and the diameter of the opening 14 was varied from 0.1 to 4.0 mm.

An 8 ml phosphoric acid buffer (pH 7.4) 17 was poured into a thermostat heat block 19, and the temperature of the liquid was regulated at 37°C. After a quartz crystal was oscillated at a basic frequency of 27 MHz by the oscillation circuit 20, the monitoring of the oscillation frequency was started by the oscillation circuit 20 with a program on the ancillary computer. Subsequently, the oscillator element 2 was immersed in the liquid 17 to stabilize the oscillation at room temperature. Thereafter, the temperature of the liquid was varied, as shown in Table 1, and then the oscillation frequency was continuously measured till the oscillation frequency was stabilized. The times necessary for stabilizing the oscillation frequency are shown in Table 1.

**Table 1**

| | | | | | | |
|---|---|---|---|---|---|---|
| Diameter of Opening mm | 0.1 | 1.5 | 3.0 | 3.5 | 4.0 | Without Opening |
| Dimensions of Opening mm² | 0.01 | 1.77 | 7.07 | 9.62 | 12.56 | Without Opening |
| Change of Liquid Temperature (°C) | +10 | +10 | +10 | +10 | +10 | +10 |
| Time for Stabilization (hr) | 0.5 | 0.2 | 0.2 | 0.5 | - | 4.0 |

### (Experiment 2)

An experiment similar to Experiment 1 was carried out. The number of openings 14 was only one, as similar to that in Experiment 1. However, the shape of the opening 14 was rectangular and the length of two sides was varied as shown in Table 2. After the liquid temperature was changed as shown in Table 2, the oscillation frequency was continuously measured till the oscillation frequency was stabilized. The times necessary for stabilizing the oscillation frequency are shown in Table 2.

**Table 2**

| | | | | | | |
|---|---|---|---|---|---|---|
| Length of Long Side of Opening mm | 1.0 | 1.0 | 2.0 | 2.0 | 2.0 | 3.0 |
| Length of Short Side of Opening mm | 0.2 | 1.0 | 2.0 | 3.0 | 4.0 | 3.0 |
| Dimensions of Opening mm² | 0.2 | 1.0 | 4.0 | 6.0 | 8.0 | 9.0 |
| Change of Liquid Temperature (°C) | +10 | +10 | +10 | +10 | +10 | +10 |
| Time for Stabilization (hr) | 0.5 | 0.2 | 0.2 | 0.2 | 0.2 | 0.5 |

### (Experiment 3)

An experiment similar to Experiment 1 was carried out. In Experiment 1, the number of openings 14 and the diameter thereof were changed, as shown in Table 3. After the liquid temperature was changed as shown in Table 3, the oscillation frequency was continuously measured till the oscillation frequency was stabilized. The times necessary for stabilizing the oscillation frequency are shown in Table 3.

**Table 3**

| | | | | | | |
|---|---|---|---|---|---|---|
| Diameter of Opening mm | 1.5 | 1.5 | 1.5 | 1.5 | 1.5 | 1.5 |
| Number of Opening mm | 1 | 2 | 3 | 4 | 5 | 6 |
| Total Dimensions of Opening mm² | 1.8 | 3.5 | 5.3 | 7.0 | 8.8 | 10.6 |
| Change of Liquid Temperature (°C) | +10 | +10 | +10 | +10 | +10 | - |
| Time for Stabilization (hr) | 0.2 | 0.2 | 0.2 | 0.2 | 0.5 | - |

### (Experiment 4)

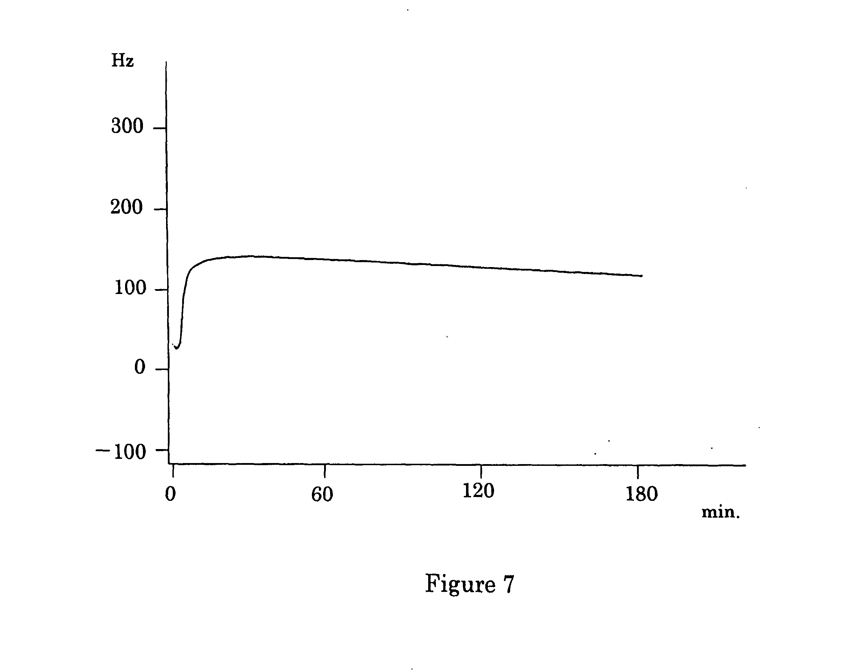

An experiment similar to Experiment 1 was carried out. The number of openings 14 was only one, as similar to that in Experiment 1. However, the shape of the opening 14 was circular and the diameter thereof was 1.5 mm. After the oscillation temperature was stabilized at room temperature (20 - 25°C) and then the liquid temperature was increased up to 30°, the change of the oscillation frequency was measured. The results obtained are given in the diagram shown in Fig. 7. In Fig. 7, the coordinate represents the oscillation frequency and the abscissa represents the time elapsed. As shown in Fig. 7, the oscillation frequency is stabilized at a relatively short time.

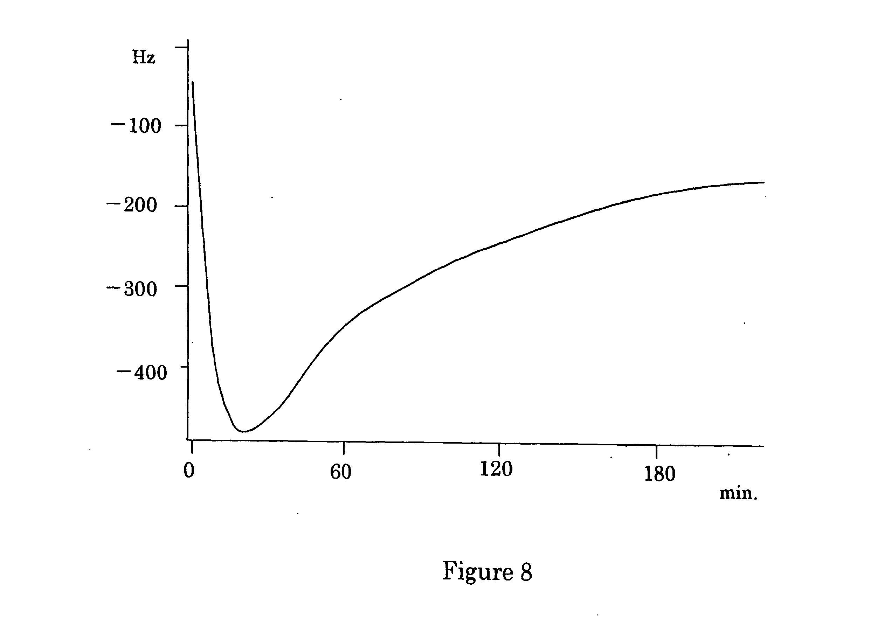

Similar experiments were carried out without usage of the opening 14 and then the change in the oscillation frequency was measured. The results obtained are shown in Fig. 8. It is noted from the diagram in Fig. 8 that the time necessary for stabilizing the oscillation frequency is considerably long, compared with those in the example in Fig. 7.

As described above, in accordance with the invention, the oscillator element generating a signal having a predetermined frequency in the state where it is immersed in a liquid as well as the mass detection apparatus using such an oscillator element provides a novel structure in which the oscillation frequency is stabilized in a relatively short time, even if the liquid temperature is changed.

## Claims

1. An oscillation device supplying a signal having a predetermined oscillation frequency in a state where said oscillation device is immersed in a liquid, said oscillation device comprising:
a vibration plate made of piezoelectric material, said vibrating plate having an obverse side, a reverse side and a side surface
a first electrode disposed in said obverse side of said vibration plate;
a second electrode disposed in said reverse side of said vibration plate; and
a cover element for covering at least the reverse side of said vibration plate;
wherein said first electrode is in contact with said liquid in the state where said oscillation device is immersed in the liquid, and a space formed by said reverse side and said cover element is filled with gas, in which case, an opening connected to said space is disposed in said cover element.

2. An oscillation device according to Claim 1, wherein, when said gas is expanded in the state where said oscillation device is immersed in said liquid, part of said gas is discharged from said opening into said liquid to maintain the pressure of said space at a constant value.

3. An oscillation device according to Claim 1 or 2, wherein said opening is disposed at a lower position than said second electrode in the state where said oscillation device is immersed in said liquid.

4. An oscillation device according to one of Claims 1 to 3, wherein said cover element includes a main body section facing said reverse side and a side wall section surrounding said side surface, wherein the inside wall surface of said side wall section is in contact with the side surface of said vibration plate, and wherein a sealing element for sealing between said side wall section and the obverse side of said vibrating plate is provided.

5. An oscillation device according to one of Claims 1 to 4, wherein said cover element is made of an elastic material.

6. An oscillation device according to one of Claims 1 to 5, wherein said liquid is either an aqueous solution or an aqueous suspension.

7. A mass detection apparatus for detecting the mass of a target substance solved or suspended in a liquid, wherein said mass detection apparatus is equipped with an oscillation device according to one of Claims 1 - 6 and a detection substance which is immobilized on said first electrode and combined with said target substance.
